# EUROPEAN PATENT SPECIFICATION

(11) **EP 1 237 830 B1**
(45) Date of publication and mention of the grant of the patent: **01.02.2006**
(21) Application number: 00978171.7
(22) Date of filing: 15.11.2000
(51) Int. Cl.: C04B 35/58, C22C 29/18

(54) **MOLYBDEN SILICIDE MATERIAL WITH HIGH STRENGTH**
MOLYBDÄNSILICID-MATERIAL MIT HOHER FESTIGKEIT
MATERIAU A BASE DE SILICIURE DE MOLYBDENE DOTE D'UNE GRANDE RESISTANCE

(30) Priority: 18.11.1999 SE 9904170
(43) Date of publication of application: 11.09.2002
(73) Proprietor: Sandvik Intellectual Property AB, 811 81 Sandviken (SE)
(72) Inventor: Sundberg, Mats, 722 43 Västeras (SE); Li, Changhai, 425 41 Hisings Kärra (SE)
(74) Representative: Örtenblad, Bertil Tore
(86) International application number: PCT/SE2000/002244
(87) International publication number: WO 2001/036347

(56) References cited:
- SE-C- 174 456
- SE-C- 175 870
- US-A- 5 382 553
- US-A- 5 640 666
- US-A- 5 965 051

## Description

The present invention relates to a molybden silicide material with high strength even at lower temperatures, such as at room temperature and high strength at high temperatures as well as good oxidation properties.

Metallic materials have very good physical properties at lower temperatures, but have worse physical properties at higher temperatures. This is valid even for alloyed metallic material. In practice metallic materials cannot be used at higher temperatures than approximately 1100°C.

Ceramic materials such as SiC have good high temperature properties, but are for brittle in the whole range of temperatures.

Intermetallic materials, such as Ni-, Ti- and Fe-aluminides have good high temperature properties, but their practical application temperature is below 1000 °C.

Silicides, such as molybden silicides, are attractive intermetallic materials with very good physical properties at high temperature. They have also very good oxidation-and corrosion properties due to that a layer of glass is formed on the surface, which forms a protective film.

However, like most intermetallic materials, these have low ductility and low rupture strength at room temperature. The brittle-ductile transformation temperature (BDTT) for silicides is normally high, for instance above 1000°C for MoSi₂. Below the transformation temperature silicides are extremely brittle and have low impact strength. Above the transformation temperature perform silicides more than metals with elongation properties and tension reducing properties. Since silicides undergo creep and plastic deformation above the transformation temperature, an increase in the strength at high temperatures should make them more competitive for applications at high temperature.

Different ways to increase RT (room temperature) -hardness and HT (high temperature) - strength of silicides have been tested. Thus, molybden silicide has been alloyed with V, Ti, Nb, Ta and Al in order to modify the microstructure and thereby increase the strength.

US 5,382,553 shows silicide materials having an oxygen content of 2 weight % which is a too high content.

US 5,640,666 shows a silsicide/SiC-material, but does not disclose to have a low oxygen content.

US 5,965,051 shows a silicide material comprising MoSi₂, MoB, SiC and ZrO₂, but does not specify a low oxygen content.

SE 174,456 and SE 175,870 refers to materials containing MoSi₂ and Al₂O₃.

Further, MoSi₂-ZrO₂-composites have been studied. ZrO₂ has three well-defined crystalline conditions, namely a *monoklinisk* (M), a tetragonal (T) and a cubic (C). The M-phase is stable up to 1170 °C, where it will be transformed to the T-phase. The T-phase is stable up to 2370 °C, whereafter the C-phase is stable up to the melting point 2680 °C. To this composite material have also stabilizers in the form of Y₂O₃, MgO, CaO or CeO₂ been used. By this means the material could be made tougher at a temperature below 1170°C.

However corrosion- and oxidation tests have shown that such material has poorer properties than monolithical molybden silicide and material which is merchandized with the trademark KANTHAL SUPER.

The present invention solves this problem and gives a material regarding oxidation and corrosion which is comparable to that as monolithical molybden silicide or KANTHAL SUPER shows at the same time as high values regarding RT-H_{V} and RT-K_{C} are obtained.

The existing material is consequently a molybden silicide material with high strength at both room temperature and high temperatures, constituting a composite material, which material is made by a mixture comprising MoSi₂ and ZrO₂, and characterized in, that the mixture additionally includes 5 - 30 vol-% ZrO₂ and 5 - 15 vol-% MoB and of that the content of oxygen in the form of SiO₂ or in particles of MoSi₂ is below 0.5 weight-%.

The low content of oxygen gives a considerable additional toughness, but also additional hardness at room temperature. At this it is substantial that the content of oxygen is brought to be low. A still bigger improvement is obtained if the content of oxygen is lowered to a level below approximately 0.35 weight-%. It occurs to be impractible to substantially increase the toughness if the content of oxygen exceeds said value.

The oxygen in the form of SiO₂ on and in MoSi₂-particles reacts under sintering with ZrO₂ and forms ZrSiO₄. ZrSiO₄ forms a layer around ZrO₂-particles, which lowers the tensile strength and thereby the strength of the material. Therefore it is a purpose to diminish the content of ZrSiO₄. At a content of oxygen of 0.36 weight-% has no ZrSiO₄ been detected with XRD (X-Ray-diffraction).

According to another embodiment the composite material comprises 10 - 30 vol-% ZrO₂.

MoB improves the properties of the formed oxides inasmuch as the viscosity is altered and thereby a much more uniform oxide layer is formed which efficient protects material against corrosion. MoB contributes even to, that the material obtains a higher hardness.

According to a preferred embodiment the composite material contains 8 - 12 vol-% MoB.

Besides, it is advantageous to use unstabilized ZrO₂, which gives rise to a volume increase when the phase is transformed from said T-phase to said M-phase. The increase of the volume is 3 -5 vol-%. This increase of the volume gives in its turn sources to micro cracks, which give additional toughness at room temperature.

A material of MoSi₂, ZrO₂ and MoB has still poorer rupture properties at high temperatures.

According to a much preferred embodiment the composite material comprises therefore 5-35 vol-% SiC. Preferably the material comprises 3 - 10 vol-% SiC.

It seems that it is enough with approximately 3 - 5 vol-% SiC in order to obtain high rupture strength and a low creep rate at high temperatures.

Said SiC can be added as compound, but it is advantageous that SiC was formed by that Carbon powder was added to the composite material before sintering and that SiC was formed in-situ under the sintering.

In order to obtain said SiC it is preferred that the composite material includes 0 - 3 weight-% C in the form of Carbon-powder before the sintering.

By the addition of Carbon-powder powder C will react with MoSi₂ to Mo₅Si₃ and SiC.

What was mentioned about the content of oxygen is alike substantial when material comprises SiC, as when SiC is not found.

The same levels of hardness and toughness are obtained with material without SiC. However, with SiC available, there is - besides better creep properties at high temperatures - an increasing of the ultimate strength under about 1100 - 1300 °C with up to twice obtained, compared to if SiC not was found available.

MoSi₂ constitutes the balance of the material. According to a preferred embodiment MoSi₂ will be found together with one or more of the alloying elements V, Ti. Zr. Ta or A1, where the alloying elements totally amount to 0 - 3 atom-% of the amount of MoSi₂.

Below, as an example a recipe for a material according to the invention is indicated.
70 vol-% MoSi₂ (content of oxygen 0.36 weight-%; 2.0 m²/g)
20 vol-% ZrO₂
10 vol-% MoB
1 weight-% C

After sintering the composite material according to the invention will contain MoSi₂, MoB, Mo5si3. ZrO₂, SiC and possibly ZrSiO₄.

This gives by sintering without pressure at 1700 °C a material with a density of 6.32 g/cm³. The material has hardness at room temperature of RT-H_{V} of 9.60 +/- 0.15 GPa and toughness at room temperature of RT-Kl_{C} of 7.69+/- 0.32 Mpam¹².

By use of so-called Hot Isostatic Pressing the hardness can further be increased.

Different embodiments have been described above. However, it is apparent that one skilled in the art can alter the material within indicated limits for the various materials in the mixture.

The present invention shall consequently not be considered being limited to the above-mentioned embodiments, but can be varied within the limits of the enclosed patent claims.

## Claims

1. Molybdenum silicide material with high strength at both room temperature and high temperatures, which material is a composite material made of a mixture comprising MoSi₂ and ZrO₂, **characterized in, that** the mixture in addition comprises MoB and **in that** the content of ZrO₂ is 5-30 vol% and the content of MoB is 5-15 vol% and **in that** the content of oxygen in the form of SiO2 on or in particles of MoSi₂ is below 0.5 weight-%.

2. Molybdenum silicide material according to claim 1, **characterized in, that** the mixture comprises 8 - 12 vol-% MoB.

3. Molybdenum silicide material according to claim 1 or 2, **characterized in, that** the mixture comprises 10 - 30 vol% ZrO₂.

4. Molybdenum silicide material according to claim 1, 2 or 3, **characterized in, that** ZrO₂ is unstabilized.

5. Molybdenum silicide material according to claim 1, 2, 3 or 4, **characterized in, that** the mixture comprises 3-35 vol-% SiC.

6. Molybdenum silicide material according to claim 5, **characterized in, that** composite material comprises 3-10 vol-% SiC.

7. Molybdenum silicide material according to claim 5 or 6, **characterized in, that** said SiC was formed by that Carbon powder was added to the mixture before sintering and that SiC was formed in-situ during the sintering.

8. Molybdenum silicide material according to claim 5, 6 or 7, **characterized in, that** mixture comprises 0 - 3 weight-% C in the form of Carbon powder.

9. Molybdenum silicide material according to any of the preceding claims, **characterized in, that** MoSi₂ constitutes the balance of the material together with one or more of the alloying elements V, Ti, Zr, Ta or Al, where the alloying elements totally constitute 0 - 3 atom-% of the amount of MoSi₂.

## Patentansprüche

1. Molybdän-Silicid-Material mit hoher Festigkeit sowohl bei Raumtemperatur als auch bei hohen Temperaturen, wobei das Material ein Komposit-Material aus einer Mischung ist, die MoSi₂, und ZrO₂ umfasst, **dadurch gekennzeichnet, dass** die Mischung zusätzlich MoB aufweist, und dass der Gehalt von ZrO₂ 5 bis 30 Volumen-% und der Gehalt von MoB 5 bis 15 Volumen-% beträgt, und dass der Gehalt von Sauerstoff in der Form von SiO₂ an oder in Partikeln von MoSi₂ weniger als 0,5 Gewichts-% beträgt.

2. Molybdän-Silicid-Material nach Anspruch 1, **dadurch gekennzeichnet, dass** die Mischung 8 bis 12 Volumen-% MoB aufweist.

3. Molybdän-Silicid-Material nach Anspruch 1 oder 2, **dadurch gekennzeichnet, dass** die Mischung 10 bis 30 Volumen-% ZrO₂ aufweist.

4. Molybdän-Silicid-Material nach Anspruch 1, 2 oder 3, **dadurch gekennzeichnet, dass** das ZrO₂ instabilisiert ist.

5. Molybdän-Silicid-Material nach Anspruch 1, 2, 3 oder 4, **dadurch gekennzeichnet, dass** die Mischung 3 bis 35 Volumen-% SiC aufweist.

6. Molybdän-Silicid-Material nach Anspruch 5, **dadurch gekennzeichnet, dass** das Komposit-Material 3 bis 10 Volumen-% SiC aufweist.

7. Molybdän-Silicid-Material nach Anspruch 5 oder 6, **dadurch gekennzeichnet, dass** das SiC gebildet wird, indem Kohlenstoffpulver der Mischung vor einem Sintern beigefügt wird, und dass SiC während des Sinterns an Ort und Stelle gebildet wird.

8. Molybdän-Silicid-Material nach Anspruch 5, 6 oder 7, **dadurch gekennzeichnet, dass** die Mischung 0 bis 3 Gewichts-% C in der Form von Kohlenstoffpulver aufweist.

9. Molybdän-Silicid-Material nach einem der vorhergehenden Ansprüche, **dadurch gekennzeichnet, dass** MoSi₂ das Gleichgewicht des Materials zusammen mit einem oder mehreren der Legierungselemente V, Ti, Zr, Ta oder Al bildet, wobei die Legierungselemente insgesamt 0 bis 3 Atom-% der Menge an MoSi₂ bilden.

## Revendications

1. Matériau à base de siliciure de molybdène doté d'une grande résistance, tant à la température ambiante qu'aux températures élevées, et qui est un matériau composite fait d'un mélange comprenant du MoSi₂ et du ZrO₂.
**caractérisé en ce que**
le mélange contient en outre du MoB, la teneur en ZrO₂ est de 5 à 30 % en volume, la teneur en MoB est de 5 à 15 % en volume, et la teneur en oxygène sous la forme de SiO₂ sur ou dans les particules de MoSi₂ est inférieure à 0,5 % en poids.

2. Matériau à base de siliciure de molybdène selon la revendication 1,
**caractérisé en ce que**
le mélange comprend de 8 à 12 % en colume de MoB.

3. Matériau à base de siliciure de molybdène selon la revendication 1 ou 2,
**caractérisé en ce que**
le mélange comprend de 10 à 30 % en volume de ZrO₂.

4. Matériau à base de siliciure de molybdène selon l'une des revendications 1, 2 ou 3,
**caractérisé en ce que**
le ZrO₂ est non stabilisé.

5. Matériau à base de siliciure de molybdène selon l'une des revendications 1, 2. 3 ou 4.
**caractérisé en ce que**
le mélange comprend de 3 à 35 % en volume de SiC.

6. Matériau à base de siliciure de molybdène selon la revendication 5,
**caractérisé en ce que**
le matériau composite comprend de 3 à 10 % en volume de SiC.

7. Matériau à base de siliciure de molybdène selon la revendication 5 ou 6,
**caractérisé en ce que**
le SiC a été formé à partir de poudre de carbone ajoutée au mélange avant frittage, et s'est formé in situ au cours du frittage.

8. Matériau à base de siliciure de molybdène selon l'une des revendications 5, 6 ou 7,
**caractérisé en ce que**
le mélange comprend de 0 à 3 % en poids de C sous la forme d'une poudre de carbone.

9. Matériau à base de siliciure de molybdène selon l'une quelconque des revendications précédentes,
**caractérisé en ce que**
le MoSi₂ constitue le reste du matériau avec un ou plusieurs des éléments d'alliage suivants, V, Ti, Zr, Ta ou Al, les éléments d'alliage constituant au total de 0 à 3 % atomique de la quantité de MoSi₂.
